# EUROPÄISCHE PATENTANMELDUNG

(11) **EP 1 120 759 A2**
(43) Veröffentlichungstag der Anmeldung: **01.08.2001**
(21) Anmeldenummer: 00127111.3
(22) Anmeldetag: 11.12.2000
(51) Int. Cl.: G07F 19/00, G07F 7/00, G07F 7/10

(54) **Anordnung zur Bereitstellung und flexiblen Vergebührung einer Ware oder Dienstleistung sowie Ausgabeautomat zum Einsatz in einer solchen und Verfahren zum Betrieb einer solchen**

(30) Priorität: 12.01.2000 DE 1000948
(71) Anmelder: SIEMENS AKTIENGESELLSCHAFT, 80333 München (DE)
(72) Erfinder: Offer, Gero, 82205 Gilching (DE)

(57) **Zusammenfassung**

Anordnung zur Bereitstellung und flexiblen Vergebührung einer Ware oder Dienstleistung für einen Besteller an einem Ausgabeautomaten (VM), mit
- einer Abrufeinrichtung (R) zum Abruf einer Ware oder Dienstleistung, insbesondere zur Auswahl aus einer Mehrzahl von Waren oder Dienstleistungen mit unterschiedlichen Preisen an dem Ausgabeautomaten,
- einem ersten Kommunikationsendgerät (MS1) beim Besteller,
- einem zweiten Kommunikationsendgerät (MS2) im Ausgabeautomaten,
- einer Kommunikationsnetzstruktur (MN), welche insbesondere ein Mobilfunknetz umfaßt, zur Verbindung des ersten Kommunikationsendgerätes mit dem zweiten Kommunikationsendgerät zur Übermittlung eines Ausgabe-Steuersignals an das zweite Kommunikationsendgerät und zur Belastung des Bestellers mit dem Preis der ausgewählten Ware oder Dienstleistung per Gebührenrechnung oder Abbuchung von einem Prepaid-Guthaben über sein Endgerät und
- einer eingangsseitig mit der Abrufeinrichtung und dem zweiten Kommunikationsendgerät verbundenen Ausgabesteuereinrichtung (DC) an dem Ausgabeautomaten oder am ersten Kommunikationsendgerät,
wobei die Abrufeinrichtung zur Übermittlung des Preises der ausgewählten Ware oder Dienstleistung in die Kommunikationsnetzstruktur (MN) ausgangsseitig mit dem Eingang des zweiten Kommunikationsendgerätes (MS2) verbunden ist.

## Beschreibung

Die Erfindung betrifft eine Anordnung zur Bereitstellung einer Ware oder Dienstleistung für einen Besteller an einem Ausgabeautomaten (engl. "Vending Machine"). Sie betrifft weiterhin einen Ausgabeautomaten zum Einsatz in einer solchen Anordnung sowie ein Verfahren zum Betrieb einer solchen Anordnung.

Die Telekommunikation ist derzeit einer der dynamischsten Wirtschaftszweige. Die hier zu verzeichnenden Wachstumsraten beruhen jetzt und vor allem in Zukunft in wesentlichem Maße darauf, daß im Rahmen von Telekommunikationsnetzen ein ständig wachsender Umfang an Dienstleistungen oder auch Waren angeboten wird, zu denen der Kunde mit seinem jeweiligen Endgerät einen einfachen Zugriff erhält.

In diesem Zusammenhang ist insbesondere auf die Möglichkeit zu verweisen, mittels eines Mobilfunk-Endgerätes (Handys) und eines speziellen Anwendungsprotokolls, nämlich des WAP (Wireless Application Protocol) Zugang zum Internet zu erlangen und jedenfalls einen Teil des dort verfügbaren Waren- und Dienstleistungsangebotes zu nutzen. Die Nutzung dieser Möglichkeit setzt jedoch speziell ausgerüstete Endgeräte einerseits und speziell konfigurierte Internet-Dienste andererseits voraus, ist also insgesamt relativ aufwendig. Dies gilt auch für die Handhabung des Endgerätes bei der Inanspruchnahme von Internet-Diensten auf dieser Grundlage.

Die Erfindung geht einerseits von den bekannten "Premium Service"-Nummern aus, zum anderen von den seit langem Ausgabeautomaten, wie sie für Erfrischungsgetränke, Süßigkeiten, Tabakwaren oder andere Produkte des täglichen Bedarfs vielerorts im Einsatz sind. Die ersteren erlauben die Verwendung einer Telefonnummer für das Einwählen auf einer fest vergebührten Dienstleistung, meist Ansage-Automaten, WAP/Internet-Datenbanken und/oder individuellen Beratungen. Allerdings lassen die herkömmlichen Premium Service Nummern keine flexible Vergebührung zu, d. h. Dienstleistungen ein und derselben Firma müssen mit unterschiedlich(st)en Nummern angesteuert werden, um unterschiedliche Wertigkeiten abbilden zu können.

Um über einen solchen Ausgabeautomaten eine gewünschte Ware zu erhalten, muß ein Interessent in der Regel passendes Hartgeld bei sich haben. Die Ausrüstung solcher Ausgabeautomaten für relativ preiswerte Waren mit aufwendigeren Vorrichtungen zur Annahme und Prüfung von Banknoten und zur Ausgabe von Wechselgeld oder mit Kreditkartenlesern wäre unverhältnismäßig kostenaufwendig und wird daher nicht praktiziert. Die zwangsweise Bindung der Benutzung eines solchen Automaten an die Verfügbarkeit eines vorbestimmten Geldbetrages in Münzen hat jedoch zur Folge, daß zum einen die Umsatzpotentiale derartige Ausgabeautomaten nicht vollständig ausgenutzt und zum anderen potentielle Interessenten nicht in jedem Fall zufriedengestellt werden können.

Der Erfindung liegt daher die Aufgabe zugrunde, eine Anordnung zur Bereitstellung einer Ware oder Dienstleistung unter Nutzung eines Endgerätes anzugeben, die endgeräteseitig keine besonderen Anforderungen stellt und seitens des Nutzers leicht zu handhaben ist.

Weiter liegen der Erfindung die Aufgaben der Bereitstellung eines entsprechenden Ausgabeautomaten sowie eines Verfahrens zur Bereitstellung der Ware oder Dienstleistung zugrunde.

Diese Aufgaben werden hinsichtlich ihres Vorrichtungsaspektes durch eine Anordnung mit den Merkmalen des Anspruchs 1 bzw. einen Ausgabeautomaten mit den Merkmalen des Anspruchs 10 sowie hinsichtlich ihres Verfahrensaspektes durch ein Verfahren mit den Merkmalen des Anspruchs 14 gelöst.

Die Erfindung schließt den Gedanken ein, eine Flexibilisierung der Vergebührung eines Premium Service Dienstes vorzunehmen, so daß die Vergebührung den angebotenen Inhalten angepaßt werden kann.

Somit steigt der Komfort sowohl für die Endnutzer als auch die Anbieter dieser Dienstleistung, und zudem werden die Rufnummerpläne der Kommunikationsnetzbetreiber entlastet.

Die Erfindung schließt weiter den wesentlichen Gedanken ein, im Rahmen eines Kommunikationsdienstes die bargeldlose Nutzung von Ausgabeautomaten zu ermöglichen. Damit wird die Nutzung der Ausgabeautomaten insbesondere für jeden Besitzer eines Mobiltelefons - und damit mit fortschreitender Verbreitung der Mobiltelefone nahezu für jedermann - in jeder Situation möglich.

Dies erschließt derartigen Ausgabeautomaten zusätzliche Umsatzpotentiale und eröffnet auch Einsatzfelder für Waren oder Dienstleistungen, die bisher gar nicht oder nur in sehr geringem Umfang auf diese Weise vertrieben werden. Sie ermöglicht zudem grundsätzlich die Umstellung von aufwendiger konstruierten und zudem hohen Wartungsaufwand erfordernden Ausgabeautomaten mit Vorrichtungen zur Annahme und Prüfung von Banknoten und Ausgabe von Wechselgeld bzw. mit Kreditoder Kundenkartenlesern auf ein einfacheres und wartungsfreundlicheres Prinzip.

Wesentliche Komponenten der vorgeschlagenen Gesamtanordnung sind ein Endgerät (Mobilfunk-, Festnetz- oder Datennetz-Endgerät, sprach- oder datenorientiert) in den Händen des Interessenten für die Ware oder Dienstleistung, ein weiteres (optional als Mobilfunk-Endgerät ausgebildetes) Kommunikationsendgerät im bzw. am Ausgabeautomaten, eine beide Endgeräte verbindende Netzstruktur, über die die Steuerung der Ausgabe einer gewünschten Ware oder Dienstleistung und zugleich die Realisierung der Bezahlung erfolgt, und interne Datenverbindungen im Ausgabeautomaten.

Dieser weist zudem - in an sich bekannter Weise - eine Abruf- oder Auswahleinrichtung zum Abruf einer gewünschten Ware oder Dienstleistung sowie eine mit dieser verbundene Ausgabesteuereinrichtung auf, die hier mit dem ein- oder angebauten Kommunikationsendgerät in Verbindung stehen. Die Abrufeinrichtung übermittelt an das Kommunikationsendgerät ein Abruf-Bestätigungssignal bzw. - bei einem zur Ausgabe von Waren oder Dienstleistungen mit unterschiedlichen Preisen ausgebildeten Ausgabeautomaten - ein den Preis der abgerufenen Ware oder Dienstleistung kennzeichnendes Preissignal zur externen Verbuchung über das Kommunikationsnetz. Die Ausgabesteuereinrichtung wiederum empfängt über das Kommunikationsendgerät des Ausgabeautomaten aus dem externen Netz ein Ausgabesteuersignal.

Es wurde bereits erwähnt, daß das im Ausgabeautomaten eingebaute Endgerät ein Mobilfunk-Endgerät sein kann; in diesem Fall ist die Kommunikationsnetzstruktur im wesentlichen als Mobilfunknetz oder auch durch Verknüpfung verschiedener Mobilfunknetze gebildet. Alternativ kann der Ausgabeautomat ein Festnetz- oder Datenendgerät aufweisen, und das vom Besteller der Ware oder Dienstleistung genutzte Mobilfunknetz ist über einen Gateway-Server mit dem Fest- oder Datennetz verbunden, in dem das Endgerät des Ausgabeautomaten arbeitet. Im Falle eines Festnetzes muß dieses als intelligentes Netz ausgeführt sein, um die vorgeschlagene Funktionalität realisieren zu können.

Allgemein umfaßt die Kommunikationsnetzstruktur einen zentralen Dienst-Server oder ein intelligentes Netz (IN) zur Steuerung des Bereitstellungsvorganges der Ware oder Dienstleistung, dem eine Servicenummer zugeordnet ist. Dem einzelnen Ausgabeautomaten des Systems ist eine individuelle Kennnummer oder Netzadresse zugeordnet, die entweder auf dem Automaten ausgewiesen ist (im Falle sogenannter "Hard goods" = Waren) oder über die üblichen Medien bekannt gemacht wird (bevorzugt bei Dienstleistungen, Informationsbereitstellungen) und bei einem Bestellvorgang über das Endgerät des Interessenten eingegeben wird.

In einer anderen Ausführung erfolgt die Eingabe der individuellen Kennnummer oder Netzadresse selbsttätig bei Betätigung der Abrufeinrichtung am Automaten. Bei dieser Ausführung unterscheidet sich natürlich der Ablauf des Kommunikationsvorganges zwischen dem Interessenten (mit seinem Mobilfunk-Endgerät), dem Ausgabeautomaten (über dessen Endgerät) und dem zentralen Server oder IN von der ersten Ausführung, worauf weiter unten genauer hingewiesen wird.

Der den Bereitstellungsdienst für die Ware oder Dienstleistung realisierende Server bzw. das IN ist bei einem Dienstverwaltungsknoten/Dienststeuerknoten des Kommunikationsnetzes etabliert. Zwischen ihm und dem Kommunikationsendgerät beim Ausgabeautomaten besteht während des Bestell- und Ausgabevorganges eine bidirektionale Kommunikations- bzw. Datenverbindung. Zum Endgerät des Bestellers besteht eine bevorzugt ebenfalls bidirektionale Kommunikationsverbindung, die insbesondere die Realisierung einer akustischen und/oder optischen Menüführung über das Endgerät des Interessenten ermöglicht.

Im Falle von Warenausgabeautomaten weisen diese bevorzugt eine Vorratsüberwachungseinrichtung auf, mit der die im Automaten enthaltenen Vorräte überwacht werden und die im Falle der Erschöpfung ein Nichtverfügbarkeitssignal an die Dienstzentrale übermittelt. Wenn dieses Signal anliegt, werden Verbindungen, in deren Rahmen die betreffende Ware oder Dienstleistung angefordert wird, ohne Kostenbelastung für den Interessenten beendet, wobei diesem natürlich eine entsprechende Information übermittelt wird. Zugleich wird das Nichtverfügbarkeitssignal bevorzugt als Steuersignal zur Auslösung einer Nachlieferung der ausgegangenen Ware bzw. zur Schaffung der Voraussetzung zur Ausführung der nicht mehr möglichen Dienstleistung über einen entsprechenden Wartungsdienst genutzt. Außerdem wird zweckmäßigerweise (auch) am Ausgabeautomaten selbst ein optisches oder akustisches Signal ausgegeben, welches die Nichtverfügbarkeit der betreffenden Ware oder Dienstleistung reflektiert.

Der Ausgabeautomat als solcher muß mindestens über eine Schnittstelle zum Anschluß des erwähnten Kommunikationsendgerätes verfügen, welche die interne Verbindung mit der Abrufeinrichtung einerseits und der Ausgabesteuereinrichtung andererseits realisiert. Das Kommunikationsendgerät - nach obigem insbesondere ein Mobiltelefon, ein Festnetztelefon oder ein einfaches Datenendgerät - ist aus Sicherheits- und Verfügbarkeitsgründen bevorzugt fest eingebaut.

Das vorgeschlagene Verfahren nach Anspruch 13 hat vorteilhafte Ausgestaltungen insbesondere im Hinblick auf die bereits erwähnte Menüführung des Interessenten und Verarbeitung des Nichtverfügbarkeitssignals sowie weiterhin vor allem in Bezug auf Authentisierungs- und Prüfungsvorgänge zur Verifizierung der Zugangsberechtigung des Interessenten, zur Prüfung eines etwaigen Prepaid-Guthabens oder Kreditrahmens o. ä.

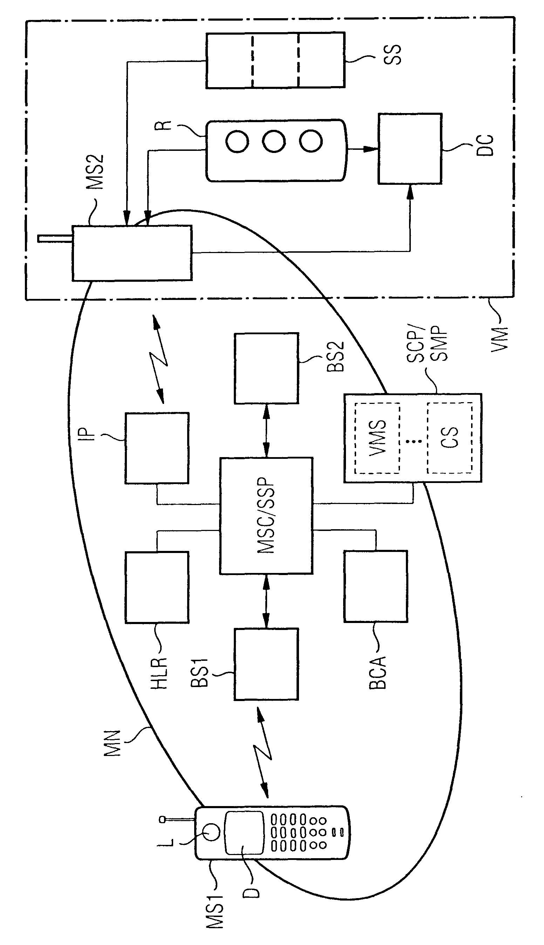

Vorteile und Zweckmäßigkeiten der Erfindung ergeben sich im übrigen aus den Unteransprüchen sowie der nachfolgenden Beschreibung eines hier bevorzugten Ausführungsbeispiels anhand der Figur. Diese zeigt: eine Gesamtanordnung zur Ausgabe einer Ware aus einem Ausgabeautomaten VM aufgrund einer über ein Mobiltelefon MS1 durch einen Interessenten übermittelten Anforderung.

Das Mobiltelefon MS1 (das ein Display D und eine Hörkapsel L aufweist) des Interessenten steht hierbei in einem Mobilfunknetz MN in Verbindung mit einem Mobilfunksende- und Empfangsteil MS2 in dem Ausgabeautomaten VM. Diese Verbindung wird in der üblichen Weise über eine dem Mobiltelefon MS1 zugeordnete erste Basisstation BS1, eine Mobilvermittlungsstelle/Dienstvermittlungsknoten MSC/SSP und eine zweite Basisstation BS2 realisiert, welche dem Mobilfunksende- und -empfangsteil MS2 fest zugeordnet ist. Der Mobilvermittlungsstelle/Dienstvermittlungsknoten MSC/SSP ist - in ebenfalls an sich bekannter Weise - eine Heimatdatei HLR, eine intelligente Peripherie IP, ein Dienststeuerknoten/Dienstverwaltungsknoten SCP/SMP und eine Gebühren-/Kostenerfassungseinheit BCA zugeordnet. Im Dienststeuerknoten/Dienstverwaltungsknoten SCP/SMP ist im Rahmen der hier vorgeschlagenen Lösung insbesondere ein Ausgabeautomatendienst VMS und - dies wieder in an sich bekannter Weise - eine Rufüberprüfung (Call Screening) CS implementiert.

Der Ausgabeautomat VM umfaßt im hier interessierenden Zusammenhang neben dem Mobilfunksende- und -empfangsteil MS2 eine über einen ersten Eingang mit dessen Ausgang verbundene Ausgabesteuereinheit DC, eine mit dem Eingang des Mobilfunksende- und -empfangsteils MS2 verbundene Abrufeinrichtung R und eine ebenfalls ausgangsseitig mit einem Eingang des Mobilfunksende- und -empfangsteils MS2 verbundene Vorratsüberwachungseinrichtung SS. Die Abrufeinrichtung R ist hier als Auswahleinrichtung zur Auswahl verschiedener Waren mit unterschiedlichem Preis ausgebildet, und entsprechend umfaßt die Vorratsüberwachungseinrichtung SS mehrere Komponenten zur Überwachung der Vorräte der einzelnen Waren. Die Abrufeinrichtung R ist im übrigen ausgangsseitig auch mit einem weiteren Eingang der Ausgabesteuereinheit DC verbunden.

Der Ablauf eines Bestell- und Ausgabevorganges und somit des Verfahrens zum Betrieb der in der Figur gezeigten Anordnung ist der folgende:

Der Besteller wählt auf dem Mobiltelefon MS1 eine auf dem Ausgabeautomaten VM angezeigte Rufnummer, die eine sogenannte "Flexible Premium Rate Number" (im Gegensatz zu der bis dato verwendeten Premium Rate Number, die stets mit einer festen Vergebührung verbunden ist) ist und sich aus einer allgemeinen Servicenummer und einer Kennnummer des konkreten Ausgabeautomaten zusammensetzt. Dieser Ruf wird über die Mobilvermittlungsstelle/Dienstvermittlungsknoten MSC/SSP an den Ausgabeautomatendienst VMS geroutet, der in Form eines intelligenten Netzes in Zuordnung zum Dienststeuerknoten/Dienstverwaltungsknoten SCP/SMP implementiert ist. Von hier wird nach der Prüfung anhand sogenannter "Whitelist"- und "Blacklist"- Speicher, ob der Bestellruf angenommen oder zurückgewiesen werden muß, ein Befehl an den Dienstvermittlungsknoten SSP zur Weiterleitung der ankommenden Nachrichten an die intelligente Peripherie IP ausgegeben. Zugleich wird an die intelligente Peripherie im Gut-Fall der Prüfung ein Befehl zum Abspielen einer akustischen Menüführung und im Zurückweisungsfall ein Befehl zum Abspielen einer Mitteilung, daß der Benutzer zur Nutzung des Dienstes nicht berechtigt ist, ausgegeben. (Optional kann die intelligente Peripherie IP wegfallen und die Menüführung findet am Ausgabeautomaten selbst statt, da dieser ja die hierfür notwendigen Tasten und Displays besitzt. In diesem Falle wird im Zurückweisungsfall das Besetzt-Signal angelegt, d. h. es sind dann generell keine Ansagen über Intelligent Peripherals notwendig.) Auf eine entsprechende Rückmeldung der intelligenten Peripherie IP über die Beendigung des Bestellerführungsmenüs wird die Rufweiterleitung zur IP unterbrochen und der Ruf zum intelligenten Netz (Ausgabeautomatendienst VMS) zurückgeholt.

Im Falle einer Akzeptanz wird durch den Ausgabeautomatendienst VMS die "Flexible Premium Rate Number" in eine reale Rufnummer des Mobilfunksende- und -empfangsteils MS2 des Ausgabeautomaten VM umgesetzt und eine Verbindung mit diesem hergestellt. Falls nicht ein Signal seitens der Vorratsüberwachungseinrichtung SS vorliegt, das die Vorräte sämtlicher Waren aufgebraucht sind, wird der Ruf durch das Mobilfunksende- und -empfangsteil MS2 angenommen. (Falls alle Vorräte einer Sorte aufgebraucht sind, wird dies für den vor dem Ausgabeautomaten stehenden Interessenten aufgrund einer optischen Anzeige am Automaten nach (dem) Stand der Technik selbst deutlich; einer speziellen Mitteilung über die Mobilfunkstrecke bedarf es daher nicht. Es ist aber auch denkbar, eine solche zusätzliche Mitteilung über den Ausgabeautomatendienst VMS zu erstellen.)

Das Zustandekommen der Verbindung zum Mobilfunksende- und -empfangsteil MS2 im Ausgabeautomaten VM wird dem Interessenten über das Mobiltelefondisplay D seines Mobiltelefons MS1 oder dessen Hörkapsel L optisch und/oder akustisch angezeigt. In Befolgung einer bei der vorangegangenen Menüführung erhaltenen Instruktion betätigt der Interessent jetzt eine Taste der Abrufeinrichtung R zur Auswahl der gewünschten Ware. Die Abrufeinrichtung R gibt ein entsprechendes Ausgangssignal sowohl an die Ausgabesteuereinheit DC als auch an das Mobilfunksende- und -empfangsteil MS2 aus und initiiert damit einerseits die Ausgabe der Ware (in an sich bekannter Weise über einen Ausgabeschacht des Ausgabeautomaten VM) und andererseits einen elektronischen Zahlungs- bzw. Kontenbelastungsvorgang.

Der Zahlungsbetrag in Höhe des Preises der speziell ausgewählten Ware (ggf. erhöht um ein Verbindungsentgelt) wird - je nach Betriebsweise des Mobiltelefons MS1 des Interessenten - von einem beim zuständigen Dienststeuerknoten geführten Prepaid-Guthaben des Besitzers abgebucht oder in dessen Gebührenrechnung vermerkt. Hierzu wird ein von der Abrufeinrichtung R generiertes Preissignal über das Mobilfunksende- und -empfangsteil MS2 in das Mobilfunknetz MN an die Dienstelogik VMS eingespeist. Diese erstellt ein Ticket, das später über die Gebühren-/Kostenerfassungseinheit BCA ausgewertet wird. Im Falle einer erfolgten Ausgabe der Ware findet sich hier der Warenwert (ggf. erhöht um ein Verbindungsentgelt), im Falle einer nicht erfolgten Ausgabe ggf. das Verbindungsentgelt wieder. Im letzten Fall kann, entsprechend der landesüblichen Rechtsprechung, entweder der Warenanbieter oder der Nutzer belastet werden.

Die vorgeschlagene Lösung ermöglicht den Vertrieb von Waren mit unterschiedlichen Preisen über einen Ausgabeautomaten per Kommunikationsnetz und hat zudem den Vorteil, daß eine Kostenbelastung des Interessenten nur bei tatsächlicher Betätigung der Abrufeinrichtung R erfolgt.

Das durch die Abrufeinrichtung R generierte Signal wird im intelligenten Netz des Ausgabeautomatendienstes VMS desweiteren für Buchführungs- und sonstige Auswertungszwecke (beispielsweise für statistische Auswertungen hinsichtlich Produktpräferenzen, Kundenverhalten o. ä.) genutzt. Zweckmäßigerweise wird es auch zur Bestandsverfolgung der Waren im Ausgabeautomaten genutzt, so daß bereits vor Ausgabe eines Nichtverfügbarkeitssignals durch die Vorratsüberwachungseinrichtung SS eine Ergänzung der Vorräte durch einen dazu beauftragten Lieferdienst erfolgen kann.

Die Ausführung der Erfindung ist nicht auf das oben beschriebene Beispiele beschränkt, sondern ebenso in einer Vielzahl von Abwandlungen möglich, die im Rahmen fachgemäßen Handelns liegen. Insbesondere ist sie nicht auf ein Mobilfunknetz beschränkt und nicht auf die Ausgabe von Waren, sondern auch für die Ausgabe von Informationen und anderen Dienstleistungen brauchbar. Insbesondere hierfür ist eine Ausführung der Abrufeinrichtung am ersten Endgerät (des Interessenten) sinnvoll, da es hier in der Regel keinen für den Interessenten physisch zugänglichen Ausgabeautomaten geben wird. Die "Abrufeinrichtung" ist also in diesem Fall im Grunde ein Auswahlmenü und der "Ausgabeautomat" eine Zugriffs- bzw. Ausgabesteuerung einer Datenbank.

## Patentansprüche

1. Anordnung zur Bereitstellung und flexiblen Vergebührung einer Ware oder Dienstleistung für einen Besteller an einem Ausgabeautomaten (VM), mit
- einer Abrufeinrichtung (R) zum Abruf einer Ware oder Dienstleistung, insbesondere zur Auswahl aus einer Mehrzahl von Waren oder Dienstleistungen mit unterschiedlichen Preisen an dem Ausgabeautomaten,
- einem ersten Kommunikationsendgerät (MS1) beim Besteller,
- einem zweiten Kommunikationsendgerät (MS2) im Ausgabeautomaten,
- einer Kommunikationsnetzstruktur (MN), welche insbesondere ein Mobilfunknetz umfaßt, zur Verbindung des ersten Kommunikationsendgerätes mit dem zweiten Kommunikationsendgerät zur Übermittlung eines Ausgabe-Steuersignals an das zweite Kommunikationsendgerät und zur Belastung des Bestellers mit dem Preis der ausgewählten Ware oder Dienstleistung per Gebührenrechnung oder Abbuchung von einem Prepaid-Guthaben über sein Endgerät und
- einer eingangsseitig mit der Abrufeinrichtung und dem zweiten Kommunikationsendgerät verbundenen Ausgabesteuereinrichtung (DC) an dem Ausgabeautomaten oder am ersten Kommunikationsendgerät,
wobei die Abrufeinrichtung zur Übermittlung des Preises der ausgewählten Ware oder Dienstleistung in die Kommunikationsnetzstruktur (MN) ausgangsseitig mit dem Eingang des zweiten Kommunikationsendgerätes (MS2) verbunden ist.

2. Anordnung nach Anspruch 1,
**dadurch gekennzeichnet**, daß
das erste und/oder zweite Kommunikationsendgerät (MS2) als Mobilfunk-Endgerät und die Kommunikationsnetzstruktur als Mobilfunknetz (MN) ausgebildet sind.

3. Anordnung nach Anspruch 1 oder 2,
**dadurch gekennzeichnet**, daß
das zweite Kommunikationsendgerät als Festnetz- oder Daten-Endgerät ausgebildet ist und insbesondere ein Mobilfunknetz der Kommunikationsnetzstruktur über einen Gateway-Server mit dem Festnetz oder Datennetz verbunden ist.

4. Anordnung nach einem der vorangehenden Ansprüche,
**dadurch gekennzeichnet**, daß
die Kommunikationsnetzstruktur einen zentralen Dienst-Server oder ein intelligentes Netz (VMS) umfaßt, dem eine Servicenummer zugeordnet ist, und
dem Ausgabeautomaten (VM) eine Kennnummer oder Netzadresse zugeordnet ist, die bei einem Bestellvorgang über das erste Kommunikationsendgerät (MS1) oder bei Betätigung der Abrufeinrichtung (R) selbsttätig eingegeben wird.

5. Anordnung nach Anspruch 4,
**dadurch gekennzeichnet**, daß
der zentrale Dienst-Server oder das intelligente Netz (VMS) bei einem Dienststeuerknoten (SCP) des Kommunikationsnetzes (MN) vorgesehen ist, in dem das erste Kommunikationsendgerät (MS1) arbeitet.

6. Anordnung nach Anspruch 4 oder 5,
**dadurch gekennzeichnet**, daß
zwischen dem Dienst-Server oder dem intelligenten Netz (VMS) und dem zweiten Kommunikationsendgerät (MS2) bei einem Bestell- und Ausgabevorgang eine bidirektionale Kommunikations-bzw. Datenverbindung besteht.

7. Anordnung nach einem der Ansprüche 4 bis 6,
**dadurch gekennzeichnet**, daß
zwischen dem Dienst-Server oder dem intelligenten Netz (VMS) und dem ersten Kommunikationsendgerät (MS1) bei einem Bestell- und Ausgabevorgang eine bidirektionale Kommunikationsverbindung besteht.

8. Anordnung nach einem der Ansprüche 4 bis 7,
**dadurch gekennzeichnet**, daß
beim Dienst-Server oder intelligenten Netz (VMS) Mittel, insbesondere ausgebildet als intelligente Peripherie (IP), zur akustischen und/oder optischen Menüführung über eine Hörkapsel (L) und/oder eine optische Anzeigeeinheit des Endgerätes (MS1) des Bestellers vorgesehen sind.

9. Anordnung nach einem der vorangehenden Ansprüche,
**dadurch gekennzeichnet**, daß der Ausgabeautomat (VM) eine Vorratsüberwachungseinrichtung (SS) aufweist, die zur Ausgabe und Übermittlung eines Nichtverfügbarkeitssignals in die Kommunikationsnetzstruktur (MN) über das zweite Kommunikationsendgerät (MS2) bei Erschöpfung des Vorrates an einer bestimmten Ware oder Dienstleistung ausgebildet ist.

10. Ausgabeautomat (VM) zur Bereitstellung einer Ware oder Dienstleistung zum Einsatz in einer Anordnung nach einem der vorangehenden Ansprüche, mit
- einer Abrufeinrichtung (R) zum Abruf der Ware oder Dienstleistung, insbesondere aus einer Mehrzahl von Waren oder Dienstleistungen mit unterschiedlichen Preisen, und
- einer eingangsseitig mit der Abrufeinrichtung verbundenen Ausgabesteuereinrichtung (DC),
**gekennzeichnet durch**
ein eingebautes Kommunikationsendgerät (MS2) oder eine Schnittstelle zur Verbindung eines solchen mit dem Ausgang der Abrufeinrichtung (R) und einem Eingang der Ausgabesteuereinrichtung (DC).

11. Ausgabeautomat nach Anspruch 10,
**dadurch gekennzeichnet**, daß
das Kommunikationsendgerät (MS2) ein Mobilfunk-Endgerät ist oder die Schnittstelle zum Anschluß eines solchen angepaßt ist.

12. Ausgabeautomat nach Anspruch 10,
**dadurch gekennzeichnet**, daß
das Kommunikationsendgerät ein Festnetz- oder Daten-Endgerät ist oder die Schnittstelle zum Anschluß eines solchen angepaßt ist.

13. Ausgabeautomat nach einem der Ansprüche 10 bis 12,
**gekennzeichnet durch**
eine Vorratsüberwachungseinrichtung (SS), die zur Ausgabe und Übermittlung eines Nichtverfügbarkeitssignals an das eingebaute Kommunikationsendgerät oder die Schnittstelle bei Erschöpfung des Vorrates an einer bestimmten Ware oder Dienstleistung ausgebildet ist.

14. Verfahren zum Betrieb einer Anordnung nach einem der Ansprüche 4 bis 9 zur Bereitstellung einer Ware oder Dienstleistung für einen Besteller an einem Ausgabeautomaten, mit den Schritten
(a) Anwahl der vorbestimmten Servicenummer des Dienst-Servers oder intelligenten Netzes mit dem Kommunikationsendgerät des Bestellers,
(b) Triggerung des Dienst-Server oder intelligenten Netzes zur Abwicklung der Bereitstellung,
(c) Prüfung der Korrektheit der Servicenummer und der Berechtigung des Bestellers zur Nutzung des Dienstes,
(d) Herstellung einer Verbindung zum zweiten Kommunikationsendgerät und Übermittlung eines Ausgabe-Steuersignals an dieses bei positivem Prüfungsergebnis,
(e) Betätigung der Abrufeinrichtung und Übermittlung eines Abruf-Bestätigungssignals und wahlweise eines den Preis der ausgewählten Ware oder Dienstleistung repräsentierenden Preissignales von der Abrufeinrichtung an das zweite Kommunikationsendgerät,
(f) Weiterleitung des Abruf-Bestätigungssignals bzw. des Preissignals an den Dienst-Server bzw. das intelligente Netz,
(g) Abbuchung von einem Prepaid-Guthaben bzw. Belastung des Gebührenkontos des Bestellers, insbesondere in Abhängigkeit vom Preissignal,
(h) Weiterleitung des Ausgabesteuersignals und des Abruf-Bestätigungssignals an die Ausgabesteuereinrichtung und Ausgabe der bestellten Ware oder Dienstleistung.

15. Verfahren nach Anspruch 14,
**dadurch gekennzeichnet**, daß
nach dem Schritt (b) Schritte
(bl) Weiterleitung des Rufes von einem Dienststeuerknoten zu einer intelligenten Peripherie,
(b2 bis bn) akustische und/oder optische Menüführung des Bestellers durch die intelligente Peripherie über das Kommunikationsendgerät des Bestellers und
(bn+1) Rückholung des Rufes zum Dienststeuerknoten ausgeführt werden.

16. Verfahren nach Anspruch 14 oder 15,
**dadurch gekennzeichnet**, daß
durch eine Vorratsüberwachungseinrichtung ein Nichtverfügbarkeitssignal generiert und an den Dienst-Server oder das intelligente Netz übermittelt wird, sobald der Vorrat einer bestimmten Ware oder Dienstleistung erschöpft ist, und daß mindestens bei Betätigung der Abrufeinrichtung zur Auswahl dieser Ware oder Dienstleistung die Verbindung ohne Kostenbelastung für den Besteller beendet wird.
